# EUROPEAN PATENT SPECIFICATION

(11) **EP 3 722 116 B1**
(45) Date of publication and mention of the grant of the patent: **02.08.2023**
(21) Application number: 19168152.7
(22) Date of filing: 09.04.2019
(51) Int. Cl.: B60D 1/06, B60D 1/24, B60D 1/62, G01G 19/02

(54) **A SENSOR ARRANGEMENT FOR MEASURING TRAILER NOSE LOAD**
SENSORANORDNUNG ZUM MESSEN DER STÜTZLAST EINES ANHÄNGERS
AGENCEMENT DE CAPTEUR POUR MESURER LA CHARGE DU TRAIN AVANT D'UNE REMORQUE

(43) Date of publication of application: 14.10.2020
(73) Proprietor: Volvo Car Corporation, 40531 Göteborg (SE)
(72) Inventor: HÖGLUND, Frank, SE-423 39 TPRSLANDA (SE); GERDSBERG, Håkan, SE-423 50 TORSLANDA (SE); VERNERSSON, Kristian, SE-444 42 STENUNGSUND (SE)
(74) Representative: Kransell & Wennborg KB

(56) References cited:
- WO-A1-02/02360
- DE-A1-102011 076 392
- DE-U1-202007 008 391
- GB-A- 2 288 776
- US-A- 4 319 766
- US-A- 6 053 521
- US-A1- 2006 290 102
- US-B1- 6 722 684

## Description

### TECHNICAL FIELD

The present disclosure relates to a sensor arrangement for measuring the pressure on a tow ball of a vehicle caused by a trailer coupling. The present disclosure also relates to a tow hook and a trailer coupling comprising such a sensor arrangement, and to a vehicle and a trailer comprising such a sensor arrangement.

### BACKGROUND

A typical arrangement for securely coupling a vehicle to a trailer is the tow bar ball coupling. In such arrangements a tow bar is typically attached to a rear part of the vehicle chassis and often comprises a tow ball and a tow bar neck linking the tow ball to the attachment point with the vehicle chassis. The tow ball is adapted to receive a mating coupling attached to the trailer for firmly connecting the trailer to the vehicle.

The maximum load weight for a trailer is regulated by industry standards and legislation. The load weight on the trailer directly influences the vertical force on the tow ball, and therefore also a vertical load acting in the vehicle rear part, where the tow neck is attached. The load on the tow ball is often referred to as the nose load on the trailer.

The nose load directly affects the vehicle-trailer driving stability. Too high nose load may lead to loss in driving stability and difficulties in controlling the towing vehicle. On the other hand, too little nose load may in worst cases lead to separation of the trailer from the tow bar ball, or at least to reduced stability of the trailer.

Several systems for monitoring the nose load have previously been suggested. For example, US4319766 and US6053521 disclose a prior art vehicle trailer hitch and DE 20 2007 008 391 U1 discloses a trailer coupling.

However, a common problem is that the high loads may damage the system components, such as the load sensor itself.

Accordingly, there is a need for improved sensor arrangements for measuring a nose load that better protects the system components.

### SUMMARY

The invention is set out in the appended set of claims.

The disclosed subject matter generally relates to a sensor arrangement for measuring the pressure on a tow ball of a vehicle caused by a trailer coupling.

The proposed sensor arrangement comprises a pressure sensor which is protected from rotation torques between the tow ball and the trailer coupling.

When a vehicle tows a trailer and turns, the tow ball and the trailer coupling inevitably rotates with respect to each other. This causes a rotational torque at the interface between wear surfaces of the tow ball and the trailer coupling.

In order to prevent the pressure sensor from being exposed to the rotation torques present between the tow ball and trailer coupling the inventors realised to include a press element adapted to press in an axial direction on the pressure sensor but which cannot rotate with respect to the pressure sensor.

The inventors realized to arrange the pressure sensor in a cavity in either the trailer coupling or in the tow ball. The pressure sensor is adapted to measure the pressure applied by the trailer coupling on the tow ball.

The press element is arranged in the cavity and is adapted to press on the pressure sensor in an axial direction when the trailer coupling applies pressure on the tow ball. The inventors realized to shape the press element and the cavity in such a way that the press element is prevented from rotating in the cavity.

Thus, the shape, e.g. cross-section, of the cavity may at least partly match that of the press element. The shapes, e.g. cross-sections, of the cavity and the press element are non-circular, such that the press element is rotationally locked in the cavity.

Preferably, the press element is maintained in the cavity when the trailer coupling is disengaged from the tow ball. In this way, the press element is not lost when the trailer coupling is disengaged from the tow ball. For example, the press element may include magnetic component, whereby the press element is maintained in the cavity by magnetic attraction between the press element and a material in the cavity.

There is further provided, in the present disclosure, a trailer coupling comprising a sensor arrangement. In this case, the cavity is arranged in the trailer coupling and the press element is arranged to press on the sensor when the trailer coupling is engaged with a tow ball.

The trailer coupling may be comprised in a trailer.

Furthermore, the present disclosure also relates to a towing hook for a vehicle comprising a tow ball adapted to be engaged with a trailer coupling, and a sensor arrangement. In this case, the cavity is arranged in the tow ball and the press element is arranged to press on the sensor when the tow ball is engaged with a trailer coupling.

Such a towing hook may be comprised in a vehicle.

Further features of, and advantages with, the present invention will become apparent when studying the appended claims and the following description. The skilled person realize that different features of the present invention may be combined to create embodiments other than those described in the following, without departing from the scope of the present claims.

### BRIEF DESCRIPTION OF DRAWINGS

These and other aspects of the present invention will now be described in more detail, with reference to the appended drawings showing example embodiments of the invention, wherein:
FIG. 1 is a perspective view of a sensor arrangement arranged in a towing hook according to embodiments of the present disclosure;
FIG. 2 is a partly cut cross-sectional view of a sensor arrangement arranged in a towing hook according to embodiments of the present disclosure;
FIG. 3 is a partial cross-section of a sensor arrangement arranged in a tow ball according to embodiments of the present disclosure;
FIG. 4 is a conceptual perspective view of a sensor arrangement arranged in a trailer coupling according to embodiments of the present disclosure;
FIG. 5 illustrates a side-view of a trailer coupling coupled to a tow ball;
FIG. 6 conceptually illustrates a trailer coupling comprising a sensor arrangement according to embodiments of the present disclosure;
FIG. 7 conceptually illustrates an example press element and cavity according to embodiments of the present disclosure;
FIG. 8 conceptually illustrates an example press element and cavity according to embodiments of the present disclosure; and
FIG. 9 is a block diagram of a pressure sensor 802 connected to a vehicle electric control unit according to embodiments of the present disclosure.

### DETAILED DESCRIPTION

In the present detailed description, various embodiments of a towing hook and/or trailer coupling with a sensing arrangement according to the present invention are described. However, this invention may be embodied in many different forms and should not be construed as limited to the embodiments set forth herein; rather, these embodiments are provided for thoroughness and completeness, and to fully convey the scope of the invention to the skilled person. Like reference characters refer to like elements throughout.

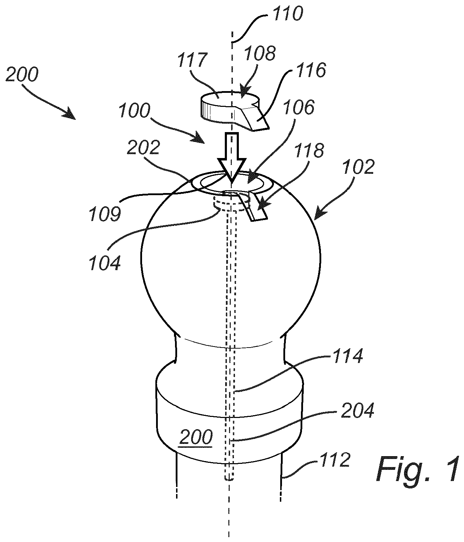

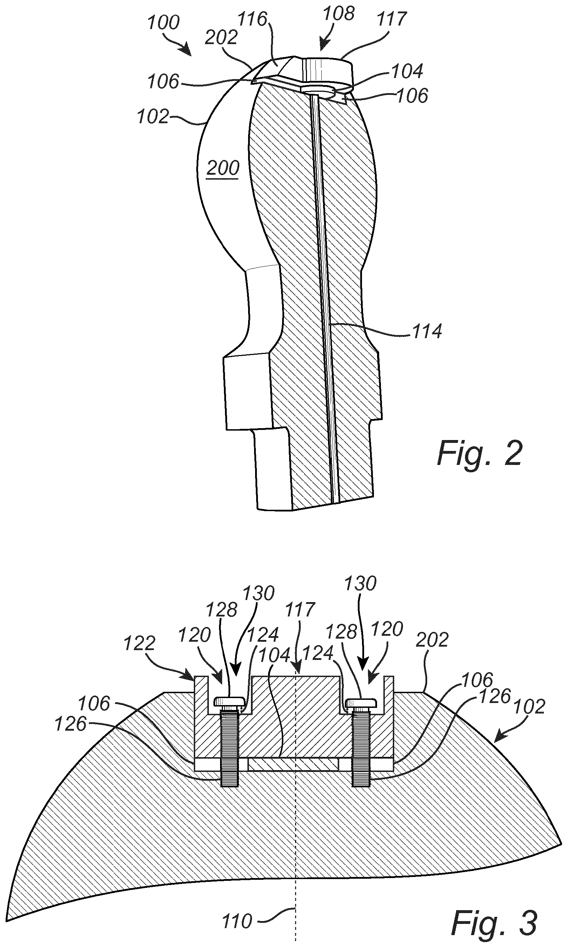

Fig. 1 is a perspective view of a sensor arrangement 100 for measuring the pressure on a tow ball 102 of a vehicle caused by a trailer coupling and Fig. 2 illustrates the sensor arrangement 100 in a partly cut cross-sectional view or the tow bar. The sensor arrangement 100 comprises a pressure sensor 104 arranged in a cavity 106 in the tow ball 102 and is adapted to measure the pressure applied by the trailer coupling on the tow ball 102. Furthermore, a press element 108 is arrangable in the cavity 106 and is adapted to press on the pressure sensor 102 in an axial direction 109 when the trailer coupling applies pressure on the tow ball 102. The press element 108 and the cavity 106 are shaped in such a way that the press element 108 is prevented from rotating in the cavity 102.

The inventors realized that a simple yet reliable way to protect the pressure sensor is to arrange it in a cavity in the tow ball, whereby a press element is arranged to press on the pressure sensor when the tow ball is coupled with a trailer coupling. According to the invention, the press element and the cavity are cooperatively configured such that the press element is not allowed to rotate in the cavity.

In use, a trailer coupling applies pressure on the press element. In response, since the press element in that situation is located between the pressure sensor and the trailer coupling, the press element transfers the pressure from the trailer coupling to the pressure sensor.

The pressure that the pressure sensor 104 is configured to measure is the axial pressure applied by the trailer coupling on the tow ball 102. The axial direction, indicated by the arrow 109, is along an axis 110 substantially along the tow bar 112 longitudinal axis. The axial direction 109 is often substantially vertical when the trailer coupling is coupled with the tow ball 102.

In order to read out a pressure measurement, the pressure sensor 104 is electrically connectable with a control unit (not shown) via wires 114 here shown to be lead through a duct in the tow ball 102 and tow bar 112. However, the connections may be made in other ways than the depicted example embodiment. The wires 114 may also be adapted to provide electrical power to the pressure sensor 104.

The pressure sensor may be of various types known *per se* in the art, for example, the sensor may be a piezo-electric sensor such as a piezo-electric strain gauge sensor, or a capacitive pressure sensor.

The pressure sensor 104 may be attached to the bottom of the cavity 106, whereby the pressure sensor 104 is interleaved between the bottom of the cavity and the press element 108 when the press element is correctly installed in the cavity 106.

The shape of the press element 108 should be such that the press element 108 may not rotate in the cavity 106. For example, the press element and the cavity may be non-circular such that the press element 108 is rotationally locked in the cavity 106.

In fig. 1, the press element 108 comprises a radial protrusion 116 that fits into a corresponding radial shape 118 of the cavity 106 to thereby rotationally lock the press element 108. The radial protrusion 116 extends in a radial direction perpendicular to the axis 110 along which the axial force from the trailer coupling is applied. In a cross-section in the plane of the radial direction, the press element 108 may have a "key-hole" shape cross-section. At the same time, the cavity 104 has a similar "key-hole" shaped cross-section.

When the press element 108 is correctly placed in the cavity 106 to be rotationally locked, it is prevented from rotating about the axial axis 110. It is about the axis 110 that most of the rotation torque at the connection between the tow ball 102 and the trailer coupling occurs. Thus, by preventing the rotation of the press element about the axis 110, the pressure sensor may be protected from the rotation torque while at the same time being able to measure the axial force.

According to embodiments, the press element 108 may be coated with a hard low friction material on a wear surface 117 located on a side of the press element 108 opposite the side facing the pressure sensor 104. In other words, the wear surface 117 which is in contact with the trailer coupling when the tow ball 102 is coupled to the trailer coupling is coated with a hard low friction material in order to reduce wear on the press element 108. Such hard low friction material include for instance titanium or composite ceramic nickel alloy composition or likewise products that are available on the market and known *per se.* The hard hard low friction material on the wear surface provides increased wear strength to the wear surface 117 which is exposed to the rotational torques when in use.

In order to prevent the press element 108 from falling out of the cavity when the trailer coupling is not coupled to the tow ball 102, a fastening means is desirable for maintaining the press element 108 in the cavity 106 when the trailer coupling is disengaged from the tow ball 102.

According to the invention the press element includes a magnetic component, whereby the press element 108 is maintained in the cavity 106 by magnetic attraction between the press element 108 and a material in the cavity 106. In other words, a magnet (not shown) may be attached to the press element 108, or integrated with the press element 108.

In one preferred embodiment, the press element 108 itself is made from a magnetic material such as ferromagnetic steel compounded of iron (magnetite or lodestone), cobalt and nickel. In such case, the wear surface 117 is coated with non-magnetic hard low friction material such as the ones mentioned above such that the press element is not drawn out from the cavity by the tow bar 102.

The magnetic forces between the magnetic press element 108 and the material of the cavity are such that the press element 108 may be removed from the cavity with exercising excessive force, e.g. a removal by hand is preferably possible.

In embodiments, a fastening element is configured to maintain the press element in the cavity when the trailer coupling is disengaged from the tow ball. Thus, a separate element may be used for ensuring that the press element stays in the cavity in cases where a magnetic solution is not preferred.

Fig. 3 illustrates one possible fastening element according to embodiments of the present disclosure. Here, the fastening element includes at least one screw or bolt 120 arranged through the press element 122 and fastenable in the cavity 106, wherein the screw or bolt 120 is arranged such that a displacement 124 of the press element 122 is allowed along the axis 110.

The bolt 120 is arranged through through-holes of the press element 122 and tightened in threaded holes 126 in the cavity 106. However, the length of the bolts 120 are such that the press element 122 may move a small displacement distance 124 before the heads 128 of the bolts prevents the press element 122 from falling out of the cavity 106. In this way, it is ensured that the measured pressure originates from the trailer coupling pressing on the tow ball 102, and not from the bolts 120 pressing the press element 122 towards the pressure sensor 104.

When the bolts are tightened to maintain the press element 122 in place, the heads 128 of the bolts 120 are located in a respective cavity 130 of the press element 122 such that the heads 128 are below the wear surface 117 of the press element 122, i.e. the bolts 120 are sunk below the wear surface 117 of the press element 122. This prevents the bolts 120 from obstructing the coupling between the tow ball 102 and the trailer coupling, and prevents the bolts 120 from being subjected to the load from the trailer coupling. The cavity 130 and the holes through the press element 122 may be so-called counter-bored holes.

In accordance with embodiments of the invention, and as is shown in figs. 1 and 2, there is also provided a towing hook 200 for a vehicle comprising a tow ball 102 adapted to be engaged with a trailer coupling and a sensor arrangement 100, wherein the cavity 106 is arranged in the tow ball 102 and the press element 106 is arranged to press on the pressure sensor 104 when the tow ball is engaged with a trailer coupling.

According to embodiments, the cavity 106 is a milled cavity in a top surface 202 of the tow ball 102. Accordingly, the cavity is advantageously made by milling into the tow ball 102. Milling provides for a reliable method for forming the cavity with sufficient tolerance.

Furthermore, the tow ball 102 and the tow bar 112 comprises an axial duct 204 through which the pressure sensor 104 is connected to a vehicle electric control unit by means of wiring 114 arranged in the axial duct 204, see fig. 1.

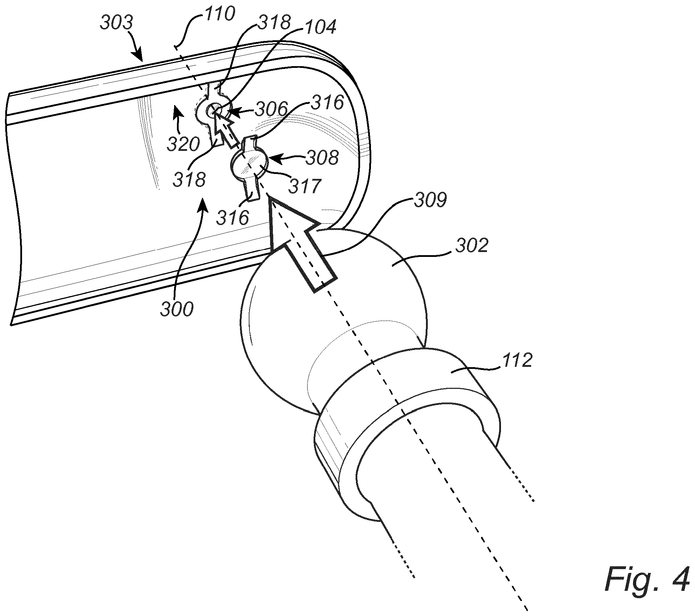

Fig. 4 conceptually illustrates a sensor arrangement 300 for measuring the pressure on a tow ball 302 of a vehicle caused by a trailer coupling 303, the sensor arrangement 300 comprising a pressure sensor 104 arranged in a cavity 306 in the trailer coupling 303 and adapted to measure the pressure applied by the trailer coupling 303 on the tow ball 302. Furthermore, a press element 308 is arrangable in the cavity 306 and adapted to press on the pressure sensor 104 in an axial direction when the trailer coupling 303 applies pressure on the tow ball 302. The press element 308 and the cavity 306 are shaped in such a way that the press element 308 is prevented from rotating in the cavity 306.

Accordingly, the inventors have realized that the pressure sensor and the pressure plate may be placed either in the tow ball as shown in fig. 1 and 2 or in the trailer coupling as will now be described with reference to figs. 3-5.

Thus, the inventors realized that a simple yet reliable way to protect the pressure sensor is to arrange it in a cavity in the trailer coupling, whereby a press element is arranged to press on the pressure sensor when the tow ball is coupled with a trailer coupling. Advantageously, the press element and the cavity are cooperatively configured such that the press element is not allowed to rotate in the cavity.

The pressure that the pressure sensor 104 is configured to measure is the axial pressure applied by the trailer coupling 303 on the tow ball 302. The axial direction, indicated by the arrow 309, is along an axis 110 substantially along the tow bar 112 longitudinal axis. The axial direction 109 is often substantially vertical when the trailer coupling 303 is coupled with the tow ball 102.

The pressure sensor 104 may be attached to the bottom of the cavity 306, whereby the pressure sensor 104 is interleaved between the bottom of the cavity 306 and the press element 308 when the press element 308 is correctly installed in the cavity 306.

The shape of the press element 308 should be such that the press element 308 may not rotate in the cavity 306. For example, the press element and the cavity may be non-circular such that the press element 308 is rotationally locked in the cavity 306.

In fig. 4, the press element 308 comprises radial protrusions 316 that fit into a corresponding radial shape 318 of the cavity 306 to thereby rotationally lock the press element 308. The radial protrusions 316 extend in a radial direction substantially perpendicular to the axial axis 110.

When the press element 308 is correctly placed in the cavity 306 to be rotationally locked, it is prevented from rotating about the axial axis 110 about which axis most of the rotation torque at the connection between the tow ball 102 and the trailer coupling occurs, as was discussed above in relation to figs 1 and 2.

Similar to what was described with reference to fig. 1, the press element 308 may be coated with a hard low friction material on a wear surface 317 located on a side of the press element 308 opposite the side facing the pressure sensor 104. In other words, the wear surface 117 which is in contact with the tow ball 102 when the trailer coupling 303 is coupled to the tow ball 102 is coated with a hard low friction material in order to reduce wear on the press element 308.

The cavity 306 may be a milled cavity formed in an inner surface 320 of the trailer coupling 303 at the interface between the trailer coupling 303 and the tow ball 302 when engaged with each other.

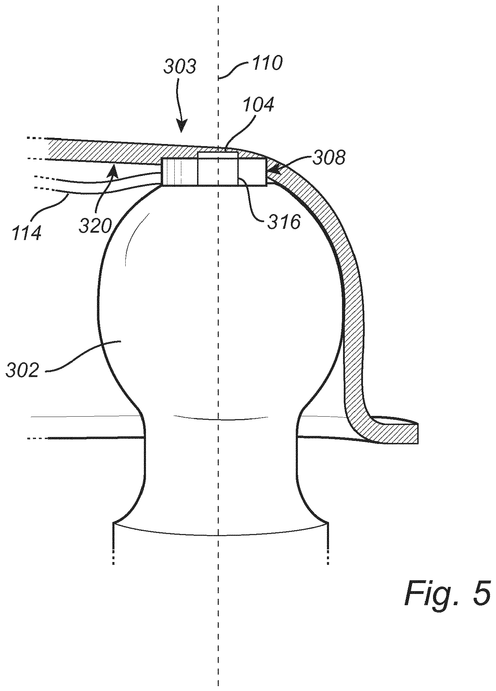

Fig. 5 illustrates a side-view of the trailer coupling 303 coupled to the tow ball 302. The press element 308 receives the tow ball 302 and presses on the pressure sensor 104 located between the bottom surface of the cavity 306 and the press element 308.

In order to read out a pressure measurement from the pressure sensor 104, the pressure sensor 104 is electrically connected with a control unit (not shown) via wires 114. The wires 114 may be arranged through a duct or hole or arranged in a protective casing and is here shown for illustrative purposes. The wires 114 may also be adapted to provide electrical power to the pressure sensor 304. The wires 114 may be connected to the vehicle through the electrical connections for providing power to and control of lights (e.g. brake lights, directional lights, parking light, etc.) on the trailer as is well known to the skilled person.

Similar to when the press element is arranged in the tow ball, in order to prevent the press element 108 from falling out of the cavity 306 when the trailer coupling is not coupled to the tow ball 102, a fastening element may be configured to maintain the press element 108 in the cavity 106 when the trailer coupling is disengaged from the tow ball 102.

As was the case with the press element 108 described with reference to figs 1-2, the press element 308 may include a magnetic component, whereby the press element 308 is maintained in the cavity 306 by magnetic attraction between the press element 308 and a material in the cavity 306. Preferable, the press element 308 itself may be made from a magnetic material. Thus, the fastening solution for the press element 308 arranged in the cavity 306 in the trailer coupling is analogous to the one described with reference to fig. 2, except that the cavity is in the trailer coupling instead of in the tow ball.

Additionally, another possible fastening element according to embodiments of the present disclosure includes at least one screw or bolt arranged through the press element 308 and fastenable in the cavity 306, wherein the screw or bolt is arranged such that a displacement of the press element is allowed along the axial axis 110. This fastening element solution is analogous to the one described with reference to fig. 3, except that the cavity is in the trailer coupling instead of in the tow ball.

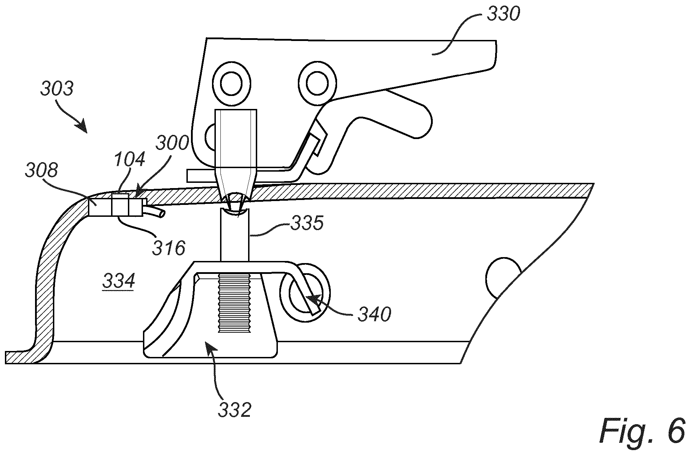

Fig. 6 conceptually illustrates a trailer coupling 303 comprising a sensor arrangement 300, wherein the cavity 306 (see also fig. 4) is arranged in the trailer coupling 303 and the press element 308 is arranged to press on the pressure sensor 104 when the trailer coupling is engaged with a tow ball.

As is often the case, and for the sake of completeness, the trailer coupling 303 comprises a handle 330 which may be lifted for opening the engagement mechanics 332 to allow a tow ball to enter the coupling space 334. When the handle 330 is lifted, the connection bar 335 pushes downwards such that the engagement mechanics 332 rotates counter-clockwise about pivot axis 340 and thereby opens the coupling space 334 for the tow ball. This type of coupling solution for engaging a tow bar with a trailer coupling is shown for example purposes and many different solutions are known to the skilled person and are within the scope of the appended claims.

The particular shapes of the press elements 308 and 108 are selected for exemplary purposes and may be replaced by any other shape as long as the press element is rotationally locked in the cavity.

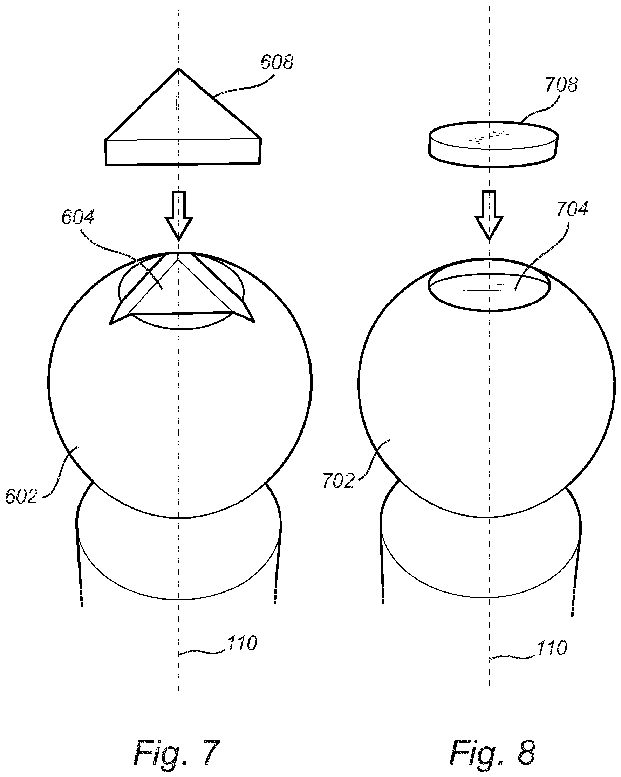

For example, as illustrated in fig. 7 a press element 608 may have a polygonal shape, here exemplified by a triangular press element 608. Thus, the cross-section of the press element 608 may be triangular or polygonal in a plane perpendicular to the longitudinal axis about which rotational torque is exerted to the press element 608. In this case, the cavity 604 of the tow ball 602 has the same triangular, or polygonal, shape.

Furthermore, as illustrated in fig. 8 a press element 708 may have an oval or elliptical shape. Thus, the cross-section of the press element 708 may be oval or elliptical in a plane perpendicular to the longitudinal axis 110 about which rotational torque is exerted to the press element 708. In this case, the cavity 704 of the tow ball 702 has the same oval or elliptical shape.

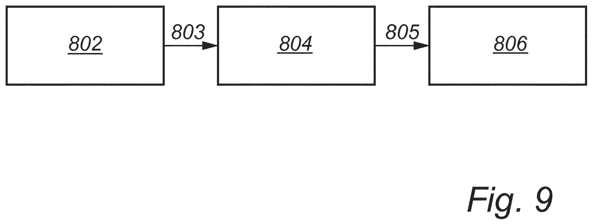

Fig. 9 is a block diagram that illustrates that a pressure sensor 802 may be configured to transmit a signal 803 indicative of a measured pressure to a vehicle electric control unit 804.

Connecting the pressure sensor to the vehicle electric control unit provides for real-time monitoring of the nose load for a user. In addition, the vehicle electric control unit 804 may transmit a signal indicative of the measured pressure to a portable device 806 via wireless transmission. In this way, a user may monitor the nose load with a portable device, thereby not having to enter the vehicle in order to receive information about the nose load.

There is further provided a vehicle comprising the towing hook according to any one of the herein disclosed embodiments.

The communication between the pressure sensor and the vehicle control unit may be hardwired in the case of having the sensor in the tow ball, or may use other known electrical connection techniques or networks known in the art, and may go though the electrical connection usually used for connecting the trailer lights to the vehicle. The vehicle control unit may communicate via CAN-buses Wireless communication may go via a suitable type of communication technology such as e.g. 3G, 4G, 5G, Wi-Fi, Bluetooth, etc.

The control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" docs not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

Various examples have been described. These and other examples are within the scope of the following claims.

## Claims

1. A towing hook (200) for a vehicle comprising a tow ball (102) adapted to be engaged with a trailer coupling and sensor arrangement (100, 300) for measuring the pressure on the tow ball (102, 302, 602, 702) of the vehicle caused by a trailer coupling (303), the sensor arrangement (100) comprising:
a pressure sensor (104, 802) arranged in a cavity (106, 604, 704) in the tow ball (102) and adapted to measure the pressure applied by the trailer coupling (303) on the tow ball (102), and
a press element (108, 308, 608, 708) arranged in the cavity (106, 306) and adapted to press on the pressure sensor (104) in an axial direction when the trailer coupling (303) applies pressure on the tow ball (102), **characterized in that**
the press element (108) and the cavity (106) are shaped in such a way that the press element (108) is prevented from rotating in the cavity (106), and **in that**
the press element (108) includes a magnetic component (), whereby the press element (108) is maintained in the cavity (106) by magnetic attraction between the press element (108) and a material in the cavity (106).

2. The towing hook (200) according to claim 1, wherein the press element (108) comprises a radial protrusion (116) that fits into a corresponding radial shape of the cavity (106) to thereby rotationally lock the press element (108).

3. The towing hook (200) according to claim 1, wherein the press element (108) and the cavity (106) are non-circular such that the press element (108) is rotationally locked in the cavity (106).

4. The towing hook (200) according to any one of the preceding claims, wherein the pressure sensor configured to transmit a signal indicative of a measured pressure to a vehicle electric control unit.

5. The towing hook (200) according to any one of the preceding claims, wherein the press element is coated with a hard low friction material on a wear surface located on a side of the press element opposite the side facing the pressure sensor.

6. The towing hook (200) according to any one of the preceding claims, wherein the pressure sensor is attached to the bottom of the cavity.

7. The towing hook (200) according to according to any one of the preceding claims, wherein the cavity is a milled cavity on a top surface of the tow ball (102).

8. The towing hook (200) according to any one of the preceding claims, wherein the tow ball (102) and the tow bar comprises an axial duct through which the pressure sensor is electrically connectable to a vehicle electric control unit by means of wiring arranged in the axial duct.

9. A vehicle comprising the towing hook (200) according to any one of the preceding claims.

10. A trailer coupling (303) comprising a sensor arrangement for measuring the pressure on a tow ball (302) of the vehicle caused by a trailer coupling, the sensor arrangement comprising:
a pressure sensor (104) arranged in a cavity (306) in the trailer coupling and adapted to measure the pressure applied by the trailer coupling on the tow ball (202) of a vehicle, and
a press element (308) arranged in the cavity (306) and adapted to press on the pressure sensor (104) in an axial direction when the trailer coupling applies pressure on the tow ball (302), **characterized in that**
the press element (308) and the cavity (306) are shaped in such a way that the press element (308) is prevented from rotating in the cavity (306), and **in that**
the press element (308) includes a magnetic component, whereby the press element (308) is maintained in the cavity (306) by magnetic attraction between the press element (308) and a material in the cavity (306).

11. The trailer coupling (303) according to claim 10, wherein the cavity (306) is a milled cavity formed in an inner surface (320) of the trailer coupling at the interface between the trailer coupling and a tow ball (102) when engaged with each other.

12. The trailer coupling (303) according to any one of claims 10 and 11, wherein the press element (308) comprises a radial protrusion (316) that fits into a corresponding radial shape (318) of the cavity (306) to thereby rotationally lock the press element (308).

13. The trailer coupling (303) according to any one of claims 10 to 12, wherein the press element (308) and the cavity (306) are non-circular such that the press element (308) is rotationally locked in the cavity (306).

14. The trailer coupling (303) according to any one of claims 10 to 13, wherein the pressure sensor (104) is attached to the bottom of the cavity.

15. A trailer comprising the trailer coupling according to any one of claims 10 to 14.

## Patentansprüche

1. Zughaken (200) für ein Fahrzeug, umfassend eine Kupplungskugel (102), dazu angepasst, mit einer Anhängerkupplung in Eingriff gebracht zu werden, und Sensoranordnung (100, 300) zum Messen des Drucks auf die Kupplungskugel (102, 302, 602, 702) des Fahrzeugs, der durch eine Anhängerkupplung (303) verursacht wird, wobei die Sensoranordnung (100) Folgendes umfasst:
einen Drucksensor (104, 802), angeordnet in einem Hohlraum (106, 604, 704) in der Kupplungskugel (102) und angepasst zum Messen des Drucks, der durch die Anhängerkupplung (303) auf die Kupplungskugel (102) ausgeübt wird, und
ein Presselement (108, 308, 608, 708), angeordnet im Hohlraum (106, 306) und angepasst zum Pressen auf den Drucksensor (104) in einer axialen Richtung, wenn die Anhängerkupplung (303) Druck auf die Kupplungskugel (102) ausübt, **dadurch gekennzeichnet, dass**
das Presselement (108) und der Hohlraum (106) in einer Weise geformt sind, dass das Presselement (108) daran gehindert wird, sich im Hohlraum (106) zu drehen, und dadurch, dass
das Presselement (108) eine magnetische Komponente () umfasst, wobei das Presselement (108) durch magnetische Anziehung zwischen dem Presselement (108) und einem Material im Hohlraum (106) im Hohlraum (106) gehalten wird.

2. Zughaken (200) nach Anspruch 1, wobei das Presselement (108) einen radialen Vorsprung (116) umfasst, der in eine entsprechende radiale Form des Hohlraums (106) passt, um so dass Presselement (108) rotatorisch zu verriegeln.

3. Zughaken (200) nach Anspruch 1, wobei das Presselement (108) und der Hohlraum (106) nicht-kreisförmig sind, sodass das Presselement (108) im Hohlraum (106) rotatorisch verriegelt ist.

4. Zughaken (200) nach einem der vorhergehenden Ansprüche, wobei der Drucksensor ausgelegt ist zum Senden eines Signals, das indikativ für einen gemessenen Druck ist, an eine fahrzeugelektrische Steuereinheit.

5. Zughaken (200) nach einem der vorhergehenden Ansprüche, wobei das Presselement auf einer Verschleißoberfläche, die sich an einer Seite des Presselements gegenüber der zum Drucksensor zeigenden Seite befindet, mit einem harten reibungsarmen Material beschichtet ist.

6. Zughaken (200) nach einem der vorhergehenden Ansprüche, wobei der Drucksensor am Boden des Hohlraums befestigt ist.

7. Zughaken (200) nach einem der vorhergehenden Ansprüche, wobei der Hohlraum ein gefräster Hohlraum an einer oberen Oberfläche der Kupplungskugel (102) ist.

8. Zughaken (200) nach einem der vorhergehenden Ansprüche, wobei die Kupplungskugel (102) und die Zugstange einen axialen Kanal umfassen, durch den der Drucksensor mittels einer im axialen Kanal angeordneten Verkabelung elektrisch mit einer fahrzeugelektrischen Steuereinheit verbindbar ist.

9. Fahrzeug, umfassend den Zughaken (200) nach einem der vorhergehenden Ansprüche.

10. Anhängerkupplung (303), umfassend eine Sensoranordnung zum Messen des Drucks auf eine Kupplungskugel (302) des Fahrzeugs, der durch eine Anhängerkupplung verursacht wird, wobei die Sensoranordnung Folgendes umfasst:
einen Drucksensor (104), angeordnet in einem Hohlraum (306) in der Anhängerkupplung und angepasst zum Messen des Drucks, der durch die Anhängerkupplung auf die Kupplungskugel (202) eines Fahrzeugs ausgeübt wird, und ein Presselement (308), angeordnet im Hohlraum (306) und angepasst zum Pressen auf den Drucksensor (104) in einer axialen Richtung, wenn die Anhängerkupplung Druck auf die Kupplungskugel (302) ausübt, **dadurch gekennzeichnet, dass**
das Presselement (308) und der Hohlraum (306) in einer Weise geformt sind, dass das Presselement (308) daran gehindert wird, sich im Hohlraum (306) zu drehen, und dadurch, dass
das Presselement (308) eine magnetische Komponente umfasst, wobei das Presselement (308) durch magnetische Anziehung zwischen dem Presselement (308) und einem Material im Hohlraum (306) im Hohlraum (306) gehalten wird.

11. Anhängerkupplung (303) nach Anspruch 10, wobei der Hohlraum (306) ein gefräster Hohlraum ist, der in einer inneren Oberfläche (320) der Anhängerkupplung an der Kontaktfläche zwischen der Anhängerkupplung und einer Kupplungskugel (102) gebildet ist, wenn diese im Eingriff miteinander sind.

12. Anhängerkupplung (303) nach einem der Ansprüche 10 und 11, wobei das Presselement (308) einen radialen Vorsprung (316) umfasst, der in eine entsprechende radiale Form (318) des Hohlraums (306) passt, um so dass Presselement (308) rotatorisch zu verriegeln.

13. Anhängerkupplung (303) nach einem der Ansprüche 10 bis 12, wobei das Presselement (308) und der Hohlraum (306) nicht-kreisförmig sind, sodass das Presselement (308) im Hohlraum (306) rotatorisch verriegelt ist.

14. Anhängerkupplung (303) nach einem der Ansprüche 10 bis 13, wobei der Drucksensor (104) am Boden des Hohlraums befestigt ist.

15. Anhänger, umfassend die Anhängerkupplung nach einem der Ansprüche 10 bis 14.

## Revendications

1. Crochet de remorquage (200) pour véhicule, comprenant une boule de remorquage (102) adaptée pour être mise en prise avec un dispositif d'attelage de remorque et un agencement de capteur (100, 300) destiné à mesurer la pression, sur la boule de remorquage (102, 302, 602, 702) du véhicule, causée par un dispositif d'attelage de remorque (303), l'agencement de capteur (100) comprenant :
un capteur de pression (104, 802) agencé dans une cavité (106, 604, 704) dans la boule de remorquage (102) et adapté pour mesurer la pression appliquée par le dispositif d'attelage de remorque (303) sur la boule de remorquage (102), et
un élément de pression (108, 308, 608, 708) agencé dans la cavité (106, 306) et adapté pour presser sur le capteur de pression (104) dans une direction axiale lorsque le dispositif d'attelage de remorque (303) applique une pression sur la boule de remorquage (102), **caractérisé en ce que**
l'élément de pression (108) et la cavité (106) sont façonnés de telle sorte que l'élément de pression (108) soit empêché d'entrer en rotation dans la cavité (106), et **en ce que**
l'élément de pression (108) inclut un composant magnétique, moyennant quoi l'élément de pression (108) est maintenu dans la cavité (106) par attraction magnétique entre l'élément de pression (108) et un matériau dans la cavité (106).

2. Crochet de remorquage (200) selon la revendication 1, dans lequel l'élément de pression (108) comprend une saillie radiale (116) qui s'ajuste dans une forme radiale correspondante de la cavité (106) pour ainsi verrouiller en rotation l'élément de pression (108).

3. Crochet de remorquage (200) selon la revendication 1, dans lequel l'élément de pression (108) et la cavité (106) sont non circulaires de telle sorte que l'élément de pression (108) soit verrouillé en rotation dans la cavité (106).

4. Crochet de remorquage (200) selon l'une quelconque des revendications précédentes, dans lequel le capteur de pression est configuré pour transmettre un signal indicatif d'une pression mesurée à une unité de commande électrique de véhicule.

5. Crochet de remorquage (200) selon l'une quelconque des revendications précédentes, dans lequel l'élément de pression est enduit avec un matériau dur à faible frottement sur une surface d'usure située sur un côté de l'élément de pression opposé au côté faisant face au capteur de pression.

6. Crochet de remorquage (200) selon l'une quelconque des revendications précédentes, dans lequel le capteur de pression est fixé au fond de la cavité.

7. Crochet de remorquage (200) selon l'une quelconque des revendications précédentes, dans lequel la cavité est une cavité fraisée sur une surface supérieure de la boule de remorquage (102).

8. Crochet de remorquage (200) selon l'une quelconque des revendications précédentes, dans lequel la boule de remorquage (102) et la barre de remorquage comprennent un conduit axial à travers lequel le capteur de pression est électriquement connectable à une unité de commande électrique de véhicule au moyen de câblage agencé dans le conduit axial.

9. Véhicule, comprenant le crochet de remorquage (200) selon l'une quelconque des revendications précédentes.

10. Dispositif d'attelage de remorque (303), comprenant un agencement de capteur destiné à mesurer la pression, sur une boule de remorquage (302) du véhicule, causée par un dispositif d'attelage de remorque, l'agencement de capteur comprenant :
un capteur de pression (104) agencé dans une cavité (306) dans le dispositif d'attelage de remorque et adapté pour mesurer la pression appliquée par le dispositif d'attelage de remorque sur la boule de remorquage (202) d'un véhicule, et un élément de pression (308) agencé dans la cavité (306) et adapté pour presser sur le capteur de pression (104) dans une direction axiale lorsque le dispositif d'attelage de remorque applique une pression sur la boule de remorquage (302), **caractérisé en ce que**
l'élément de pression (308) et la cavité (306) sont façonnés de telle sorte que l'élément de pression (308) soit empêché d'entrer en rotation dans la cavité (306), et **en ce que**
l'élément de pression (308) inclut un composant magnétique, moyennant quoi l'élément de pression (308) est maintenu dans la cavité (306) par attraction magnétique entre l'élément de pression (308) et un matériau dans la cavité (306).

11. Dispositif d'attelage de remorque (303) selon la revendication 10, dans lequel la cavité (306) est une cavité fraisée formée dans une surface intérieure (320) du dispositif d'attelage de remorque à l'interface entre le dispositif d'attelage de remorque et une boule de remorquage (102) lorsqu'ils sont en prise l'un avec l'autre.

12. Dispositif d'attelage de remorque (303) selon l'une quelconque des revendications 10 et 11, dans lequel l'élément de pression (308) comprend une saillie radiale (316) qui s'ajuste dans une forme radiale correspondante (318) de la cavité (306) pour ainsi verrouiller en rotation l'élément de pression (308).

13. Dispositif d'attelage de remorque (303) selon l'une quelconque des revendications 10 à 12, dans lequel l'élément de pression (308) et la cavité (306) sont non circulaires de telle sorte que l'élément de pression (308) soit verrouillé en rotation dans la cavité (306).

14. Dispositif d'attelage de remorque (303) selon l'une quelconque des revendications 10 à 13, dans lequel le capteur de pression (104) est fixé au fond de la cavité.

15. Remorque, comprenant le dispositif d'attelage de remorque selon l'une quelconque des revendications 10 à 14.
